# EUROPEAN PATENT SPECIFICATION

(11) **EP 3 594 038 B1**
(45) Date of publication and mention of the grant of the patent: **24.02.2021**
(21) Application number: 19184118.8
(22) Date of filing: 03.07.2019
(51) Int. Cl.: B60K 5/00, B60K 5/04, B60K 5/12

(54) **A POWERTRAIN MOUNT ASSEMBLY**
ANTRIEBSSTRANGMONTAGEANORDNUNG
ENSEMBLE SUPPORT DE GROUPE PROPULSEUR

(30) Priority: 13.07.2018 GB 201811503
(43) Date of publication of application: 15.01.2020
(73) Proprietor: Ford Global Technologies, LLC, Dearborn, MI 48126-2738 (US)
(72) Inventor: COLDWELL, Mel, Maldon, Essex CM9 8DF (GB)
(74) Representative: Haseltine Lake Kempner LLP

(56) References cited:
- WO-A1-2017/102197
- CN-A- 104 890 493
- JP-A- 2013 108 555
- US-A1- 2018 009 306

## Description

### Technical Field

The present disclosure relates to a powertrain mount assembly for a vehicle, and particularly, but not exclusively, relates to a powertrain mount assembly for comprising a first body connectable to a vehicle frame structure of the vehicle at a first location and a second body connectable to the vehicle frame structure at a second location spaced apart from the first location.

### Background

An engine, or powertrain, e.g. engine and transmission, is usually mounted into the front structure of a motor vehicle. In normal use, the front structure should be strong to resist large loads from engine movements and stiff so as to benefit ride and handling of the vehicle.

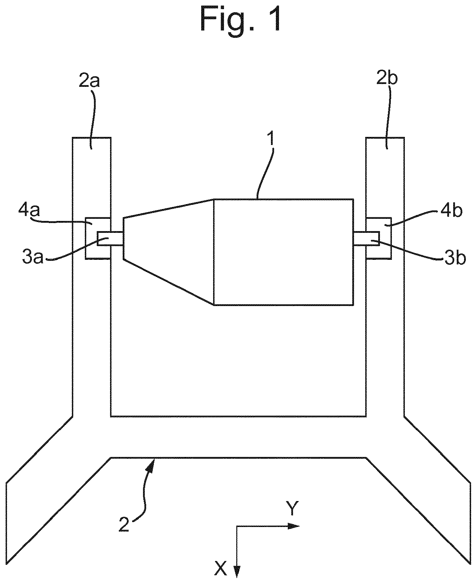

As shown schematically in Figure 1, a suspension for a front, transversely mounted, motor vehicle power plant 1 may be arranged in an automotive frame structure 2 between two front side rails 2a, 2b. The motor vehicle power plant or powertrain refers to a block or unit comprising the engine and/or gearbox of the vehicle, but may also comprise further components of the vehicle drive train.

A respective resilient engine mount 4a, 4b is arranged at each side rail 2a, 2b. The engine mounts 4a, 4b are arranged to receive a respective bracket arm 3a, 3b protruding from said motor vehicle power plant 1. The bracket arms 3a, 3b are typically received within a hydraulic unit or a rubber lined cavity arranged within a metal cup or housing. The engine mounts 4a, 4b are arranged to limit motor vehicle power plant 1 movement in a longitudinal direction of the vehicle, i.e. an X-direction, in a lateral direction of the vehicle, i.e. a Y-direction, and in a vertical direction, i.e. a Z-direction (not depicted).

Within an installation several factors can prevent the use of an engine mount with a sufficiently strong attachment. Typically the available attachment surface may be too weak or have insufficient space to allow sufficient or large enough fixings to support the required loads.

WO2017/102197A1 discloses an engine mount pendulum support device for supporting an engine relative to a body of a motor vehicle. The engine mount pendulum support device comprises first and second securing regions for securing the device on the vehicle body. JP2013108555A discloses an anti-vibration bracket for an engine mount. US2018/0009306A1 discloses an anti-vibration device and a damper device for supporting an engine of a vehicle. CN104890493A discloses an engine suspension soft pad assembly.

### Statements of Invention

According to an aspect of the present disclosure, there is provided a powertrain mount assembly for a vehicle (such as a motor vehicle), the powertrain mount assembly comprising:
a link arm connectable to a powertrain of the vehicle;
a main resilient element, an end of the link arm being coupled to the main resilient element;
a first body configured to support the main resilient element, the main resilient element being provided between the first body and the end of the link arm, wherein the first body is connectable to a vehicle frame structure of the vehicle at a first location;
a second body connectable to the vehicle frame structure at a second location, the second body being separate from the first body; and
wherein the second body comprises at least one first abutment surface configured to limit movement of the end of the link arm in a first direction.

The first abutment surface may be configured to limit movement of the link arm in a longitudinal direction of the vehicle.

The powertrain mount assembly may further comprise a first auxiliary resilient element. The first auxiliary resilient element may be provided between the end of the link arm and the first abutment surface. The first auxiliary resilient element may be coupled to the link arm or the first abutment surface.

The second body may comprise at least one second abutment surface configured to limit movement of the end of the link arm in a second direction. Alternatively, the first body may comprise at least one second abutment surface configured to limit movement of the end of the link arm in a second direction. In either case, the first and second directions may be different, e.g. orthogonal, to one another. The second abutment surface may be configured to limit movement of the link arm in a lateral direction of the vehicle.

The powertrain mount assembly may further comprise a second auxiliary resilient element. The second auxiliary resilient element may be provided between the end of the link arm and the second abutment surface. The second auxiliary resilient element may be coupled to the link arm or the second abutment surface.

The second body may comprise a third abutment surface configured to limit movement of the end of the link arm in a third direction. The first and third directions may be different, e.g. orthogonal, to one another. The second and third directions may be different, e.g. orthogonal, to one another. The third abutment surface may be configured to limit movement of the link arm in a substantially vertical direction.

The powertrain mount assembly may further comprise a third auxiliary resilient element. The third auxiliary resilient element may be provided between the end of the link arm and the third abutment surface. The third auxiliary resilient element may be coupled to the link arm or the third abutment surface.

The first location may be on a side rail of the vehicle frame structure, such as a longitudinally extending side rail, e.g. in an engine bay of the vehicle. The second location may also be on the side rail of the vehicle frame structure. Alternatively, the second location may be on a part of the vehicle frame structure spaced apart from the side rail of the vehicle frame structure.

The second location may be spaced apart from the first location. For example, the second location may be spaced vertically apart from the first location, e.g. when vehicle is on a horizontal surface.

A vehicle, such as a motor vehicle, may comprise the above-mentioned powertrain mount assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to shown more clearly how it may be carried into effect, reference will now be made, by way of example, to the accompanying drawings, in which:
Figure 1 is a schematic illustration of a suspension for a front, transversely mounted, motor vehicle power plant that is arranged in an automotive frame structure between two front side members;
Figure 2 is a perspective view of a powertrain mount assembly according to an example of the present disclosure;
Figure 3 is a schematic view in a longitudinal plane of a vehicle and shows a powertrain mount assembly according to an example of the present disclosure;
Figure 4 is a schematic view in a lateral plane of a vehicle and shows a powertrain mount assembly according to an example of the present disclosure; and
Figure 5 is a schematic view in a lateral plane of a vehicle and shows a powertrain mount assembly according to another example of the present disclosure.

### Detailed Description

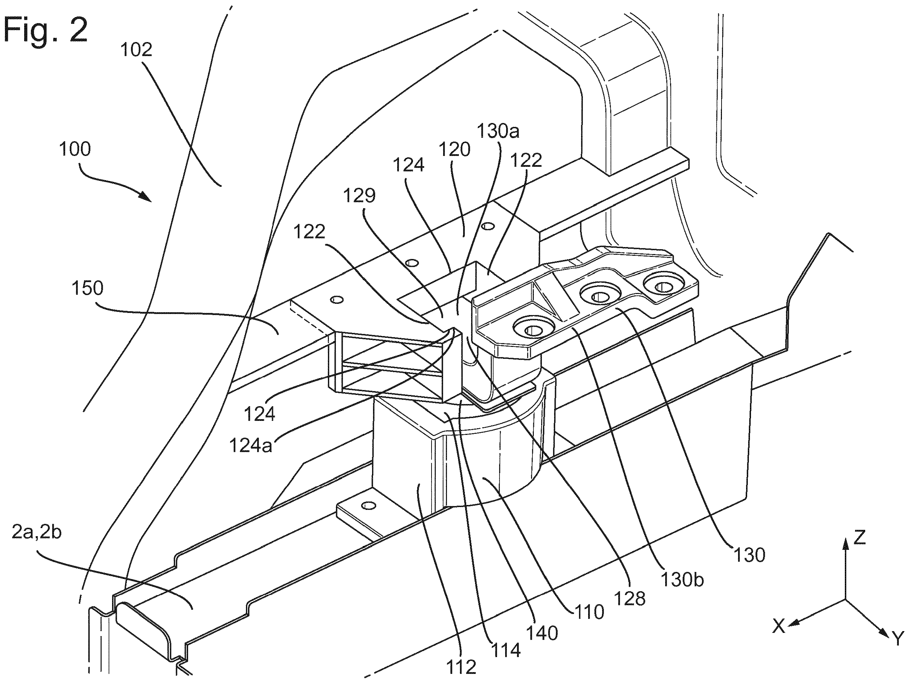

With reference to Figure 2, the present disclosure relates to a powertrain mount assembly 100 that supports a powertrain of a vehicle relative to a frame structure 102 of the vehicle. In addition to the powertrain, the frame structure 102 may support other components of the vehicle. The powertrain mount assembly 100 comprises a first body 110, a second body 120 and a link arm 130. The first body 110 is connectable to a top surface of a side rail 2a, 2b, e.g., by virtue of a weld or a fastener. As mentioned above, the side rails 2a, 2b may form part of the frame structure 102 supporting the vehicle powertrain (not shown in Figure 2). The side rails 2a, 2b may extend in a direction substantially parallel to a longitudinal axis of the vehicle. In a particular example, the first body 110 may be connected to the side rail 2b on a right hand side of the vehicle.

The powertrain mount assembly 100 further comprises a main resilient element 140, which is supported by the first body 110. A first end 130a of the link arm 130 is coupled to the main resilient element 140. A second end 130b of the link arm 130 may be coupled to the powertrain. The main resilient element 140 is provided between the first body 110 and the first end 130a of the link arm. In this way the powertrain may be resiliently coupled to the vehicle frame structure 102, e.g. such that the main resilient element 140 reduces vibrational forces from the powertrain being transmitted to the vehicle frame structure.

The main resilient element 140 may comprise a material with elastic properties, such as rubber or any other similar material. Additionally or alternatively, the main resilient element 140 may comprise fluid, such as oil, arranged in a sealed unit so as to resiliently resist movement of the link arm 130 relative to the first body 110.

The second body 120 is also connectable to the vehicle frame structure 102. However, the second body 120 is connectable to the vehicle frame structure 102 at a second location, which is spaced apart from a first location at which the first body 110 is attached to the vehicle frame structure 102. As depicted, the second body 120 is connected to a cross piece 150 that extends between other portions of the vehicle frame structure 102 (e.g. portions extending upwards from the side rail 2a, 2b). In the example depicted in Figure 2, the second location at which the second body 120 is connected to the vehicle frame structure 102 is spaced vertically apart from the first location at which the first body 110 is connected to the side rail 2a, 2b of the vehicle frame structure 102. The second location may also be laterally spaced apart from the first location. In an alternative arrangement (not shown), the second body 120 may connect to the vehicle frame structure 102 at the side rail 2a, 2b. The point at which the second body 120 connects to the side rail may be spaced apart from the first location at which the first body 110 connects to the side rail 2a, 2b. The second body 120 in this case may connect to the side rail at one or more locations, each of which is spaced apart from the first location at which the first body connects to the side rail 2a, 2b. However, regardless of where the second body 120 connects to the vehicle frame structure 102, the second body 120 is separate from the first body 110 and connects to the vehicle frame structure 102 at different locations.

The first body 110 may comprise one or more side walls 112, which as depicted may extend upwards from the top surface of the side rail 2a, 2b. The side wall 112 may define a cavity 114 in which the main resilient element 140 may be received. The first body 110 may comprise a plurality of discrete side wall portions or, as depicted, the side wall may extend continuously about the cavity 114. The first end 130a of the link arm 130 may connect to the main resilient element 140 at or towards a top end of the main resilient element 140. The link arm 130 may extend over and away from the side wall 112 of the first body 110.

With reference to Figures 2 to 5, the second body 120 comprises at least one first abutment surface 122. The first abutment surface 122 is configured to limit movement of the first end 130a of the link arm 130 in a first direction, such as the longitudinal direction X of the vehicle. In the particular example shown, the second body 120 comprises a pair of first abutment surfaces 122 provided either side of the first end 130a of the link arm 130.

The powertrain mount assembly 100 may further comprise at least one first auxiliary resilient element 123. The first auxiliary resilient element 123 may be provided between the first end 130a of the link arm 130 and the first abutment surface 122. As depicted, the first auxiliary resilient element 123 may be coupled to the second body 120 at the first abutment surface 122. However, it is also envisaged that the first auxiliary resilient element 123 may be coupled to the first end 130a of the link arm 130. A pair of first auxiliary resilient elements 123 may be provided either side of the first end 130a of the link arm 130. As the first end 130a of the link arm 130 moves during use of the powertrain, the first abutment surface 122 may limit the travel of the link arm in the longitudinal direction X. The first auxiliary resilient element 123 may resiliently resist longitudinal movement of the link arm 130.

The second body 120 may further comprise at least one second abutment surface 124 configured to limit the movement of the first end 130a of the link arm 130 in the second direction, such as a lateral direction Y of the vehicle. As depicted, there may be a pair of second abutment surfaces 124 on either side of the first end 130a of the link arm 130. However, as depicted in Figure 2, one of the second abutment surfaces 124 may be divided by an opening 128 through which the link arm 130 may pass. For example, in the particular example shown in Figure 2, the second body 120 comprises a recess 129 in which the first end 130a of the link arm 130 may reside. The second body 120 forms a pair of shoulders 124a (only one shown) either side of the opening 128 through which the link arm 130 may extend to the recess 129. The second abutment surfaces 124 on one side of the link arm first end 130a may be formed on the shoulders 124a. The link arm 130 may comprise a neck 132 between the first and second ends 130a, 130b and the neck may fit through the opening 128. The link arm 130 may widen out at its first end 130a, which is sized to fit within the recess 129.

The powertrain mount assembly 100 may further comprise at least one second auxiliary resilient element 125. The second auxiliary resilient element 125 may be provided between the first end 130a of the link arm 130 and the second abutment surface 124. In the particular example shown, a pair of second auxiliary resilient elements 125 may be provided either side of the link arm first end 130a, although one of the second auxiliary elements 125 may be split across the shoulders 124a either side of the link arm. As depicted, the second auxiliary resilient elements 125 may be coupled to the second body 120 at the second abutment surfaces 124. However, it is also envisaged that the second auxiliary resilient elements 125 may be coupled to the link arm first end 130a. During use of the powertrain the second abutment surfaces 124 may limit movement of the link arm first end 130a in the lateral direction Y of the vehicle. The second auxiliary resilient element 125 may resiliently resist movement of the link arm first end 130a in the lateral direction.

The second body 120 may further comprise a third abutment surface 126, which is configured to limit movement of the link arm first end 130a in a third direction, such as a vertical direction. Accordingly, the second body 120 may extend above the link arm first end 130a when installed. In the example shown in Figure 2, the third abutment surface is not provided on the second body 120. Movement in the vertical direction may instead be limited by the connection between the link arm first end 130a and the first body 110.

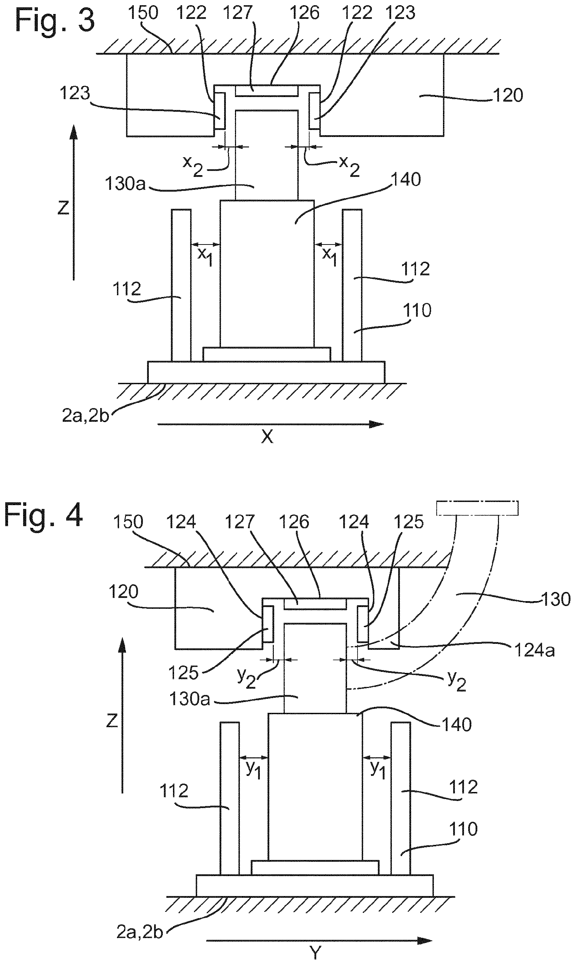

The powertrain assembly 100 may further comprise a third auxiliary resilient element 127. The third auxiliary resilient element 127 may be provided between the link arm first end 130a and the third abutment surface 126. In the examples depicted in Figures 3 to 5, the third auxiliary resilient element 127 is coupled to the second body 120 at the third abutment surface 126. However, it is also envisaged that the third auxiliary resilient element 127 may be coupled to the link arm first end 130a. During use of the powertrain, the third abutment surface 126 may limit the vertical travel of the link arm 130 and the third auxiliary resilient element 127 may resiliently limit the movement of the link arm.

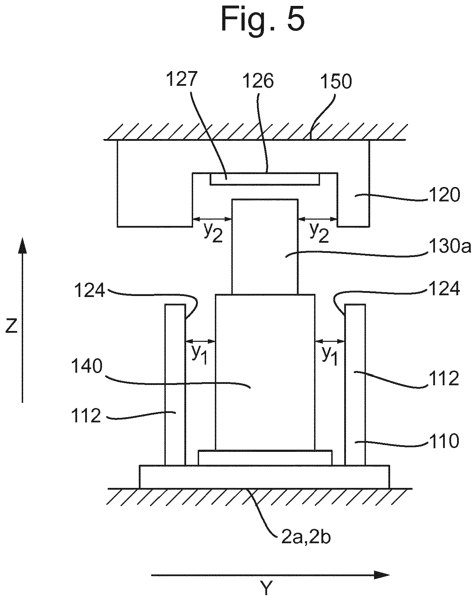

In the example depicted in Figures 3 and 4, the interaction between the link arm first end 130a and the second body 120 limits the movement of the link arm in the longitudinal direction X of the vehicle. Accordingly, a spacing x₂ between the link arm first end 130a and the second body 120 is less than a spacing x₁ between the main resilient element 140 and the side wall 112 of the first body 110. Additionally or alternatively, an interaction between the link arm first end 130a in the second body 120 may limit the movement of the link arm first end 130a in the lateral direction Y of the vehicle. In this case a lateral spacing y₂ between the link arm first end 130a and the second body 120 may be less than the lateral spacing y₁ between the main resilient element 140 and the first body side wall 112. However, in an alternative arrangement an interaction between the main resilient element 140 and the first body 110 may limit movement of the link arm 130 in the lateral direction. In this case, the spacing y₁ between the main resilient element 140 and the first body side wall 112 may be less than the lateral spacing y₂ between the link arm first end 130a and the second body 120. Accordingly, in the example depicted in Figure 5, the first body 110 provides the second abutment surface 124, e.g., on the side wall 112 so as to limit movement of the main resilient element 140 in the lateral direction Y.

The powertrain mount assembly 100 advantageously provides a separate load path for the forces from the powertrain to be transmitted to the vehicle frame structure 102. In particular, the larger forces tend to be in the longitudinal direction X and these can be transmitted via the second body 120, which is coupled to the vehicle frame structure 102 at a separate location to that of the first body 110. The coupling of the first body 110 to the side rails 2a, 2b can therefore be designed to withstand lower forces and can potentially be reduced in size. This may have a positive effect on the crumple performance of the side rail 2a, 2b. Furthermore, having separate first and second bodies 110, 120 allows these components to be interchanged and increases the design flexibility. Moreover, the second body 120 may be removable from the vehicle support framework 102 and this may improve access to the first body 110 and/or main resilient element 140.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. A powertrain mount assembly (100) for a vehicle, the powertrain mount assembly (100) comprising:
a link arm (130) connectable to a powertrain of the vehicle;
a main resilient element (140), an end of the link arm (130) being coupled to the main resilient element (140); and
a first body (110) configured to support the main resilient element (140), the main resilient element (140) being provided between the first body (110) and the end of the link arm (130), wherein the first body (110) is connectable to a vehicle frame structure (102) of the vehicle at a first location;
**characterised in that** the powertrain mount assembly further comprises:
a second body (120) connectable to the vehicle frame structure (102) at a second location, the second body (120) being separate from the first body (110); and
wherein the second body (120) comprises at least one first abutment surface (122) configured to limit movement of the end of the link arm (130) in a first direction.

2. The powertrain mount assembly (100) of claim 1, wherein the first abutment surface (122) is configured to limit movement of the link arm (130) in a longitudinal direction of the vehicle.

3. The powertrain mount assembly (100) of claim 1 or 2 further comprising a first auxiliary resilient element (123), wherein the first auxiliary resilient element (123) is provided between the end of the link arm (130) and the first abutment surface (122).

4. The powertrain mount assembly (100) of any of the preceding claims, wherein the second body (120) comprises at least one second abutment surface (124) configured to limit movement of the end of the link arm (130) in a second direction, the first and second directions being different from one another.

5. The powertrain mount assembly (100) of any of claims 1 to 3, wherein the first body (110) comprises at least one second abutment surface (124) configured to limit movement of the end of the link arm (130) in a second direction, the first and second directions being different from one another.

6. The powertrain mount assembly (100) of claim 4 or 5, wherein the second abutment surface (124) is configured to limit movement of the link arm (130) in a lateral direction of the vehicle.

7. The powertrain mount assembly (100) of any of claims 4 to 6 further comprising a second auxiliary resilient element (125), wherein the second auxiliary resilient element (125) is provided between the end of the link arm (130) and the second abutment surface (124).

8. The powertrain mount assembly (100) of any of the preceding claims, wherein the second body (120) comprises a third abutment surface (126) configured to limit movement of the end of the link arm (130) in a third direction, the first and third directions being different from one another.

9. The powertrain mount assembly (100) of claim 8, wherein the third abutment surface (126) is configured to limit movement of the link arm (130) in a substantially vertical direction.

10. The powertrain mount assembly (100) of claim 8 or 9 further comprising a third auxiliary resilient element (127), wherein the third auxiliary resilient element (127) is provided between the end of the link arm (130) and the third abutment surface (126).

11. The powertrain mount assembly (100) of any of the preceding claims, wherein the first location is on a side rail (2a, 2b, 2b) of the vehicle frame structure (102).

12. The powertrain mount assembly (100) of any of the preceding claims, wherein the second location is on a side rail (2a, 2b) of the vehicle frame structure (102).

13. The powertrain mount assembly (100) of any of claims 1 to 11, wherein the second location is on a part of the vehicle frame structure (102) spaced apart from a side rail (2a, 2b) of the vehicle frame structure (102).

14. The powertrain mount assembly (100) of any of the preceding claims, wherein the second location is spaced vertically apart from the first location.

15. A vehicle comprising the powertrain mount assembly (100) of any of the preceding claims.

## Patentansprüche

1. Eine Antriebsstrang-Lagerungsanordnung (100) für ein Fahrzeug, die Antriebsstrang-Lagerungsanordnung (100) umfassend:
einen Verbindungsarm (130), der mit einem Antriebsstrang des Fahrzeugs verbunden werden kann;
ein elastisches Hauptelement (140), wobei ein Ende des Verbindungsarms (130) mit dem elastischen Hauptelement (140) gekoppelt ist; und
einen ersten Körper (110), der konfiguriert ist, um das elastische Hauptelement (140) zu tragen, wobei das elastische Hauptelement (140) zwischen dem ersten Körper (110) und dem Ende des Verbindungsarms 10 (130) bereitgestellt ist, wobei der erste Körper (110) an einer ersten Stelle mit einer Fahrzeugrahmenstruktur (102) des Fahrzeugs verbunden werden kann;
**dadurch gekennzeichnet, dass** die Antriebsstrang-Lagerungsanordnung ferner Folgendes umfasst:
einen zweiten Körper (120), der an einer zweiten Stelle mit der Fahrzeugrahmenstruktur (102) verbunden werden kann, wobei der zweite Körper (120) von dem ersten Körper (110) getrennt ist; und
wobei der zweite Körper (120) mindestens eine erste Anschlagfläche (122) umfasst, die konfiguriert ist, um eine Bewegung des Endes des Verbindungsarms (130) in eine erste Richtung zu begrenzen.

2. Antriebsstrang-Lagerungsanordnung (100) gemäß Anspruch 1, wobei die erste Anschlagfläche (122) konfiguriert ist, um eine Bewegung des Verbindungsarms (130) in eine Längsrichtung des Fahrzeugs zu begrenzen.

3. Antriebsstrang-Lagerungsanordnung (100) gemäß Anspruch 1 oder 2, ferner umfassend ein erstes elastisches Hilfselement (123), wobei das erste elastische Hilfselement (123) zwischen dem Ende des Verbindungsarms (130) und der ersten Anschlagfläche (122) bereitgestellt ist.

4. Antriebsstrang-Lagerungsanordnung (100) gemäß einem der vorherigen Ansprüche, wobei der zweite Körper (120) mindestens eine zweite Anschlagfläche (124) aufweist, die konfiguriert ist, um eine Bewegung des Endes des Verbindungsarms (130) in eine zweite Richtung zu begrenzen, wobei die erste und die zweite Richtung voneinander verschieden sind.

5. Antriebsstrang-Lagerungsanordnung (100) gemäß einem der Ansprüche 1 bis 3, wobei der erste Körper (110) mindestens eine zweite Anschlagfläche (124) umfasst, die konfiguriert ist, um eine Bewegung des Endes des Verbindungsarms (130) in eine zweite Richtung zu begrenzen, wobei die erste und die zweite Richtung voneinander verschieden sind.

6. Antriebsstrang-Lagerungsanordnung (100) gemäß Anspruch 4 oder 5, wobei die zweite Anschlagfläche (124) konfiguriert ist, um eine Bewegung des Verbindungsarms (130) in eine seitliche Richtung des Fahrzeugs zu begrenzen.

7. Antriebsstrang-Lagerungsanordnung (100) gemäß einem der Ansprüche 4 bis 6, ferner umfassend ein zweites elastisches Hilfselement (125), wobei das zweite elastische Hilfselement (125) zwischen dem Ende des Verbindungsarms (130) und der zweiten Anschlagfläche (124) bereitgestellt ist.

8. Antriebsstrang-Lagerungsanordnung (100) gemäß einem der vorherigen Ansprüche, wobei der zweite Körper (120) eine dritte Anschlagfläche (126) aufweist, die konfiguriert ist, um eine Bewegung des Endes des Verbindungsarms (130) in eine dritte Richtung zu begrenzen, wobei die erste und die dritte Richtung voneinander verschieden sind.

9. Antriebsstrang-Lagerungsanordnung (100) gemäß Anspruch 8, wobei die dritte Anschlagfläche (126) konfiguriert ist, um eine Bewegung des Verbindungsarms (130) in eine im Wesentlichen vertikale Richtung zu begrenzen.

10. Antriebsstrang-Lagerungsanordnung (100) gemäß Anspruch 8 oder 9, ferner umfassend ein drittes elastisches Hilfselement (127), wobei das dritte elastische Hilfselement (127) zwischen dem Ende des Verbindungsarms (130) und der dritten Anschlagfläche (126) bereitgestellt ist.

11. Antriebsstrang-Lagerungsanordnung (100) gemäß einem der vorherigen Ansprüche, wobei die erste Stelle an einem Seitenholm (2a, 2b) der Fahrzeugrahmenstruktur (102) ist.

12. Antriebsstrang-Lagerungsanordnung (100) gemäß einem der vorherigen Ansprüche, wobei die zweite Stelle an einem Seitenholm (2a, 2b) der Fahrzeugrahmenstruktur (102) ist.

13. Antriebsstrang-Lagerungsanordnung (100) gemäß einem der Ansprüche 1 bis 11, wobei die zweite Stelle an einem Teil der Fahrzeugrahmenstruktur (102) ist, der von einem Seitenholm (2a, 2b) der Fahrzeugrahmenstruktur (102) beabstandet ist.

14. Antriebsstrang-Lagerungsanordnung (100) gemäß einem der vorherigen Ansprüche, wobei die zweite Stelle vertikal von der ersten Stelle beabstandet ist.

15. Fahrzeug, umfassend die Antriebsstrang-Lagerungsanordnung (100) gemäß einem der vorherigen Ansprüche.

## Revendications

1. Un ensemble de support de groupe motopropulseur (100) pour un véhicule, l'ensemble de support de groupe motopropulseur (100) comprenant :
un bras de liaison (130) pouvant être connecté à un groupe motopropulseur du véhicule ;
un élément élastique principal (140), une extrémité du bras de liaison (130) étant couplée à l'élément élastique principal (140) ; et
un premier corps (110) configuré pour supporter l'élément élastique principal (140), l'élément élastique principal (140) étant prévu entre le premier corps (110) et l'extrémité du bras de liaison (130), dans lequel le premier corps (110) peut être connecté à une structure de châssis de véhicule (102) du véhicule à un premier emplacement ;
**caractérisé en ce que** l'ensemble de support de groupe motopropulseur comprend en outre :
un deuxième corps (120) pouvant être connecté à la structure de châssis de véhicule (102) à un deuxième emplacement, le deuxième corps (120) étant séparé du premier corps (110) ; et
dans lequel le deuxième corps (120) comprend au moins une première surface de butée (122) configuré pour limiter le mouvement de l'extrémité du bras de liaison (130) dans une première direction.

2. L'ensemble de support de groupe motopropulseur (100) selon la revendication 1, dans lequel la première surface de butée (122) est configurée pour limiter le mouvement du bras de liaison (130) dans une direction longitudinale du véhicule.

3. L'ensemble de support de groupe motopropulseur (100) selon la revendication 1 ou 2 comprenant en outre un premier élément élastique auxiliaire (123), dans lequel le premier élément élastique auxiliaire (123) est prévu entre l'extrémité du bras de liaison (130) et la première surface de butée (122).

4. L'ensemble de support de groupe motopropulseur (100) selon l'une quelconque des revendications précédentes, dans lequel le deuxième corps (120) comprend au moins une deuxième surface de butée (124) configurée pour limiter le mouvement de l'extrémité du bras de liaison (130) dans une deuxième direction, les première et deuxième directions étant différentes l'une de l'autre.

5. L'ensemble de support de groupe motopropulseur (100) selon l'une quelconque des revendications 1 à 3, dans lequel le premier corps (110) comprend au moins une deuxième surface de butée (124) configurée pour limiter le mouvement de l'extrémité du bras de liaison (130) dans une deuxième direction, les première et deuxième directions étant différentes l'une de l'autre.

6. L'ensemble de support de groupe motopropulseur (100) selon la revendication 4 ou 5, dans lequel la deuxième surface de butée (124) est configurée pour limiter le mouvement du bras de liaison (130) dans une direction latérale du véhicule.

7. L'ensemble de support de groupe motopropulseur (100) selon l'une quelconque des revendications 4 à 6, comprenant en outre un deuxième élément élastique auxiliaire (125), dans lequel le deuxième élément élastique auxiliaire (125) est prévu entre l'extrémité du bras de liaison (130) et la deuxième surface de butée (124).

8. L'ensemble de support de groupe motopropulseur (100) selon l'une quelconque des revendications précédentes, dans lequel le deuxième corps (120) comprend une troisième surface de butée (126) configurée pour limiter le mouvement de l'extrémité du bras de liaison (130) dans une troisième direction, les première et troisième directions étant différentes l'une de l'autre.

9. L'ensemble de support de groupe motopropulseur (100) selon la revendication 8, dans lequel la troisième surface de butée (126) est configurée pour limiter le mouvement du bras de liaison (130) dans une direction sensiblement verticale.

10. L'ensemble de support de groupe motopropulseur (100) selon la revendication 8 ou 9, comprenant en outre un troisième élément élastique auxiliaire (127), dans lequel le troisième élément élastique auxiliaire (127) est prévu entre l'extrémité du bras de liaison (130) et la troisième surface de butée (126).

11. L'ensemble de support de groupe motopropulseur (100) selon l'une quelconque des revendications précédentes, dans lequel le premier emplacement est sur un rail latéral (2a, 2b, 2b) de la structure de châssis de véhicule (102).

12. L'ensemble de support de groupe motopropulseur (100) selon l'une quelconque des revendications précédentes, dans lequel le deuxième emplacement est sur un rail latéral (2a, 2b) de la structure de châssis de véhicule (102).

13. L'ensemble de support de groupe motopropulseur (100) selon l'une quelconque des revendications 1 à 11, dans lequel le deuxième emplacement est sur une partie de la structure de châssis de véhicule (102) espacée d'un rail latéral (2a, 2b) de la structure de châssis de véhicule (102).

14. L'ensemble de support de groupe motopropulseur (100) selon l'une quelconque des revendications précédentes, dans lequel le deuxième emplacement est espacé verticalement du premier emplacement.

15. Un véhicule comprenant l'ensemble de support de groupe motopropulseur (100) selon l'une quelconque des revendications précédentes.
